# EUROPÄISCHE PATENTSCHRIFT

(11) **EP 2 905 262 B1**
(45) Veröffentlichungstag und Bekanntmachung des Hinweises auf die Patenterteilung: **08.08.2018**
(21) Anmeldenummer: 14154708.3
(22) Anmeldetag: 11.02.2014
(51) Int. Cl.: C02F 1/04, B01D 1/00, B01D 3/00, B01D 5/00, C02F 1/10, C02F 1/12, C02F 1/14, B01D 1/16, C02F 103/08

(54) **Anordnung und Verfahren zur Behandlung eines Rohwassers**
Assembly and method for treatment of raw water
Dispositif et procédé de traitement d'une eau brute

(43) Veröffentlichungstag der Anmeldung: 12.08.2015
(73) Patentinhaber: Enzenhofer, Matthias, 75397 Simmozheim (DE); Gruber, Siegfried, 33378 Rheda-Wiedenbrück (DE)
(72) Erfinder: Enzenhofer, Matthias, 75397 Simmozheim (DE); Gruber, Siegfried, 33378 Rheda-Wiedenbrück (DE)
(74) Vertreter: Glawe, Delfs, Moll

(56) Entgegenhaltungen:
- DE-A1- 2 553 464
- DE-A1-102009 031 246
- US-A- 3 345 272
- US-A- 3 440 147
- US-A1- 2011 284 443
- US-A1- 2012 073 320
- US-A1- 2012 205 236

## Beschreibung

Die Erfindung betrifft eine Anordnung und ein Verfahren zur Behandlung eines Rohwassers.
Die Gewinnung von aufbereitetem Wasser aus Rohwasser, insbesondere Meerwasser, ist beispielsweise aus der DE 10 2007 014 807 B4, der US 3,440,147 und der US 2012/0205236 bekannt. In der DE 10 2007 014 807 wird ein Verfahren vorgeschlagen, in dem Rohwasser verdampft und eine Luftmenge mit dem verdampften Rohwasser gesättigt wird. Anschließend wird die rohwasserhaltige Luftmenge an einer Anordnung von mit luftdurchlässigen Wandungen ausgestatten Adsorptionstubussen vorbeigeführt. Dabei dringt die wasserhaltige Luftmenge auch in das Lumen der Adsorptionstubusse ein. Ein Teil des von der Luftmenge mitgeführten Wassers wird außen und innen an den Adsorptionstubussen sowie innerhalb des durchlässigen Tubusmaterials abgeschieden. Mit diesem Verfahren kann aufbereitetes Wasser aus beispielsweise Meerwasser gewonnen werden, das eine solche Reinheit aufweist, dass es zumindest in der Landwirtschaft verwendet werden kann.
Das vorgenannte Verfahren kann auch dafür eingesetzt werden, um Brauchwasser für beispielsweise Hotels, Industriebetriebe oder sonstige Einrichtungen in der Nähe einer Rohwasserquelle, wie beispielsweise einer Meeresküste, bereitzustellen. Neben Brauchwasser benötigen beispielsweise Hotels wie auch Industriebetriebe oder sonstige Einrichtungen häufig Kühlung, um beispielsweise Räume zu klimatisieren oder Anlagen in den jeweiligen Einrichtungen zu kühlen. Es ist daher Aufgabe der Erfindung ein Verfahren und eine Vorrichtung zur Umsetzung des Verfahrens vorzuschlagen, das sowohl ein Rohwasser aufbereiten als auch Kühlung für externe Anwendungen bereitstellen kann. Das Verfahren als auch die Vorrichtung sollen dabei möglichst energieeffizient ausgestaltet sein.
Diese Aufgabe wird in einem ersten Aspekt der Erfindung durch eine Anordnung zur Behandlung eines Rohwassers mit einer Wärmepumpe, die ausgebildet ist, auf der Wärmeseite das Rohwasser zu erhitzen; einem Verdunster, der ausgebildet ist, das erhitzte Rohwasser teilweise in einen Luftstrom zu verdunsten; und einer Vorrichtung, die dem Verdunster nachgeschaltet ist und geeignet ist, dass im Luftstrom enthaltene Rohwasser zumindest teilweise abzuscheiden, gelöst. Dabei ist die Wärmepumpe ausgebildet, auf der Kälteseite durch nicht in den Luftstrom verdunstetes erhitztes Rohwasser mit Wärme versorgt zu werden, und weist in einem kältesten Teilbereich der Kälteseite eine thermische Kopplung auf, die geeignet ist, Kühlung für externe Anwendungen bereitzustellen.

Mit der vorgeschlagenen Anordnung kann ein Rohwasser in einen Luftstrom verdunstet werden und in einer nachgeschalteten Vorrichtung kann das im Luftstrom enthaltene Rohwasser zumindest teilweise abgeschieden werden, wodurch ein aufbereitetes Wasser erhalten werden kann, das zumindest als Brauchwasser einsetzbar ist. Zusätzlich wird das Rohwasser genutzt, um unter möglichst geringem Energieeinsatz eine Wärmepumpe zu betreiben, die wiederum auf ihrer Kälteseite Kühlung für externe Anwendungen bereitstellt.

In einer bevorzugten Ausführungsform der Anordnung ist der Vorrichtung, die geeignet ist, das im Luftstrom enthaltene Rohwasser abzuscheiden, ein Verdichtungsmittel vorgeschaltet, das geeignet ist, den Luftstrom zu verdichten. Der durch das Verdichtungsmittel verdichtete Luftstrom kann in der Vorrichtung, die geeignet ist, das im Luftstrom enthaltene Rohwasser abzuscheiden, wieder expandiert werden, sodass sich der Druck in dem Luftstrom (schlagartig) erniedrigt, wodurch die Wasserabscheidung aus dem Luftstrom begünstigt wird.

In einer vorteilhaften Ausführungsform umfasst die Vorrichtung, die geeignet ist, das im Luftstrom enthaltene Rohwasser abzuscheiden, eine Trägeranordnung mit einer Anzahl an Trägern. In einer ersten Alternative können die Träger porös gewirkte Kunststoffschläuche sein, die einer Wärmebehandlung zur mechanischen Stabilisierung unterzogen wurden. In einer zweiten Alternative können die Träger beliebige poröse Schläuche sein, die eine große Oberfläche im Inneren der Schläuche aufweisen, insbesondere Schläuche aus Kunstfasern oder Metall. In einer dritten Alternative können die Träger auch offenporige Platten sein, die insbesondere Kunstfasern, Steinwolle oder Glaswolle beinhalten.

Vorteilhafterweise wird die Vorrichtung, die geeignet ist, das im Luftstrom enthaltene Rohwasser abzuscheiden, durch das einlaufende Rohwasser vor dessen Erhitzung gekühlt. Dadurch wird der in die Vorrichtung einströmende Luftstrom gekühlt, wodurch die Wasserabscheidung aus dem einströmenden Luftstrom begünstigt wird. Auch kann die Wärmepumpe mit der Vorrichtung thermisch gekoppelt sein, um die durch den Luftstrom in die Vorrichtung eingebrachte Wärme an die Wärmepumpe abzugeben, wodurch diese unter einem geringeren Energieeinsatz betrieben werden kann.

In einer weitergehenden Ausführungsform umfasst die Anordnung zur Behandlung eines Rohwassers weiterhin eine solar- und/oder geothermische Vorrichtung, die ausgebildet ist, das Rohwasser weiter zu erhitzen. Durch die solar- und/oder geothermische Vorrichtung kann das in den Verdunster einlaufende Rohwasser weiter erhitzt werden und somit mehr Rohwasser in den Luftstrom verdunstet werden. Ebenso kann die Anordnung eine weitere solar- und/oder geothermische Vorrichtung umfassen, die mit der Kälteseite der Wärmpumpe thermisch gekoppelt ist, um für die Wärmepumpe eine weitere regenerative Wärmequelle bereitzustellen.

Gemäß einem zweiten Aspekt der Erfindung wird die vorstehende Aufgabe durch ein Verfahren zur Behandlung eines Rohwassers gelöst, das folgende Schritte aufweist: Erhitzen des Rohwassers; teilweises Verdunsten des erhitzten Rohwassers in einen Luftstrom; und zumindest teilweises Abscheiden des in den Luftstrom verdunsteten Rohwassers. Dabei wird das Rohwasser durch die Wärmeseite einer Wärmepumpe erhitzt und die Wärmepumpe auf der Kälteseite durch nicht in den Luftstrom verdunstetes erhitztes Rohwasser mit Wärme versorgt. In einem kältesten Teilbereich der Kälteseite weist die Wärmepumpe eine thermische Kopplung auf, um Kühlung für externe Anwendungen bereitzustellen.

Bevorzugt weist das Verfahren dabei weiterhin einen Schritt des Verdichtens des Luftstroms vor dem Abscheiden des in den Luftstrom verdunsteten Rohwassers auf. Besonders bevorzugt wird das erhitzte Rohwasser bis zur Sättigung des Luftstroms in diesen verdunstet.

Mit dem erfindungsgemäßen Verfahren kann ein Rohwasser aufbereitet werden bis dieses zumindest Brauchwasserqualität hat, um beispielsweise als Brauchwasser in Hotels oder auch Industriebetrieben eingesetzt zu werden. Zudem kann mit dem erfindungsgemäßen Verfahren Kühlung für externe Anwendungen bereitgestellt werden, die beispielsweise von mit Rohwasser versorgten Hotels zur Kühlung der Zimmer verwendet werden kann. Das aufbereitete Rohwasser und die Kühlung können insbesondere demselben Abnehmer zur Verfügung gestellt werden, jedoch auch an verschiedene Abnehmer abgegeben werden. Das erfindungsgemäße Verfahren kann dabei insbesondere mit der erfindungsgemäßen Anordnung auf effiziente Weise ausgeführt werden.

Im Folgenden wird die Erfindung unter Bezugnahme auf die beiliegenden Zeichnungen näher erläutert. Dabei bezeichnen gleiche Bezugszeichen gleiche oder gleichwirkende Elemente.

Es zeigen:
- Fig. 1: eine schematische Darstellung der erfindungsgemäßen Anordnung zur Behandlung eines Rohwassers; und
- Fig. 2: eine schematische Teilansicht einer Trägeranordnung einer Vorrichtung, die geeignet ist, in einem Luftstrom enthaltenes Rohwasser abzuscheiden.

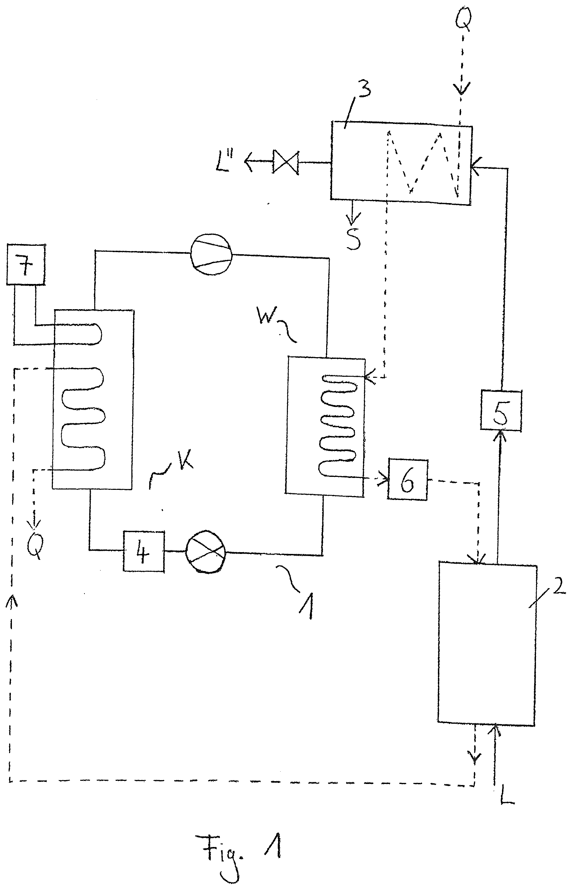

Der Anordnung der Fig. 1 wird Rohwasser von einer Rohwasserquelle Q, die beispielsweise das Meer sein kann, zugeführt. Das einlaufende Rohwasser kann beispielsweise eine Temperatur von ca. 15-20 °C aufweisen, wenn es dem Meer entnommen wird. Das Rohwasser kann zunächst zur Kühlung über eine Vorrichtung 3, die geeignet ist, in einem Luftstrom enthaltenes Rohwasser zumindest teilweise abzuscheiden, geleitet werden, um anschließend auf der Wärmeseite W einer Wärmepumpe 1 erhitzt zu werden. Das nun erhitzte Rohwasser wird im Weiteren einem Verdunster 2 zugeführt, der ausgebildet ist, das erhitzte Rohwasser teilweise in einen Luftstrom L zu verdunsten. Zwischen der Wärmeseite W der Wärmepumpe 1 und dem Verdunster 2 kann dabei in einer weitergehenden Ausführungsform der Anordnung eine solar- und/oder geothermische Vorrichtung 6 geschaltet sein, die ausgebildet ist, das auf der Wärmeseite W bereits erhitzte Rohwasser weiter zu erhitzen.

Das erhitzte Rohwasser wird in dem Verdunster 2 in den Luftstrom L verdunstet. Das Rohwasser kann dabei über beispielsweise einen Brause- bzw. Sprühkopf oder auch über Düsen in den Verdunster 2 eingebracht werden, wo die Rohwassertröpfchen aufgrund ihrer im Vergleich zu einem kompakten Strahl vergrößerten Oberfläche besser in den Luftstrom L verdunstet werden können. Die Verdunstung wird durch die Erhitzung des Rohwassers auf eine Temperatur im Bereich von 60 bis 80 °C begünstigt. Besonders bevorzugt wird bis zur Sättigung des Luftstroms L Rohwasser in diesen verdunstet.

Der nunmehr mit Rohwasser beladene Luftstrom L' wird im Weiteren der Vorrichtung 3, die geeignet ist, das im Luftstrom L' enthaltene Rohwasser zumindest teilweise abzuscheiden, zugeführt. Dabei kann der Luftstrom L' auch zuerst durch ein Verdichtungsmittel 5, das beispielsweise ein Ventilator sein kann, verdichtet und anschließend in die Vorrichtung 3 eingeleitet werden.

Die Vorrichtung 3 weist im Inneren eine Trägeranordnung mit einer Anzahl an Trägern auf. Die Träger entwickeln gegenüber dem in dem Luftstrom L' enthaltenen Rohwasser Adhäsionseffekte, die ein Abscheiden des Wassers an den Trägern erleichtern. Die Oberfläche der Träger dient dabei als Kondensationskern, der die Bildung größerer Wassertröpfchen durch das in dem Luftstrom L' enthaltene Rohwasser ermöglicht. Das an den Trägern abgeschiedene Rohwasser kann nunmehr in der Vorrichtung 3 aufgefangen werden und von dort einer Bedarfs- oder Sammelstelle S zugeführt werden. Die Bedarfs- oder Sammelstelle S kann dabei beispielsweise ein Brauchwassersystem einer Hotelanlage oder auch eines Industriebetriebs sein. Auch kann die Sammelstelle S beispielsweise ein Tank sein, um das abgeschiedene Wasser zu sammeln.

Als Träger können zum einen beispielsweise Profile, Schläuche oder Rohre verwendet werden, insbesondere gewirkte Kunststoffschläuche, die bevorzugt aus Thermoplasten wie etwa Polyester, Polyamid, Polyethylen oder Polypropylen bestehen. Dabei ist insbesondere Polyester für die gewirkten Kunststoffschläuche geeignet. Die gewirkten Kunststoffschläuche können aus einem oder mehreren Filamenten gebildet sein, bevorzugt aus mehreren Filamenten. Die gewirkten Kunststoffschläuche werden durch eine thermische Behandlung wie etwa teilweisem Zusammenschmelzen oder Zusammensintern der Elemente, gegebenenfalls unter Schrumpfung, mechanisch stabiler gemacht. Die so behandelten Kunststoffschläuche sind formstabiler und zeigen eine gewisse Eigensteifigkeit und Biegeelastizität. Sie bleiben dabei aber porös, sodass sie eine im Vergleich zu glatten Kunststoffschläuchen vergrößerte Oberfläche aufweisen, um so die Bildung von Wassertröpfchen durch in dem Luftstrom L' enthaltenes Rohwasser zu begünstigen.

Als Träger eignen sich dabei aber nicht lediglich die oben genannten gewirkten Kunststoffschläuche, sondern im Prinzip jede Art von porösem Schlauch aus Kunststoff oder auch aus Kunstfasern oder Metallen. Entscheidend für die Effizienz der Tröpfchenbildungen und somit der Wasserabscheidung aus der Luft ist die zur Verfügung stehende Oberfläche, insbesondere auch im Inneren bzw. in den Wandungen der Träger.

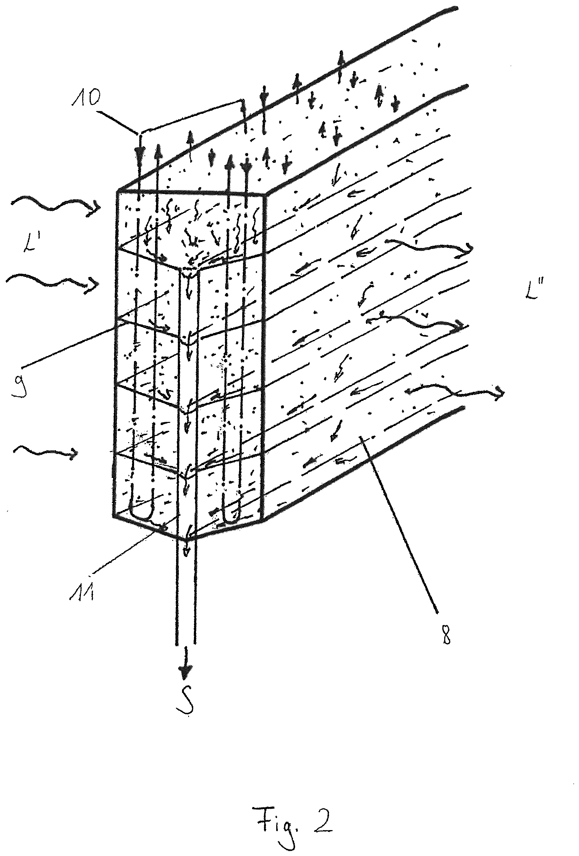

Wie in der Fig. 2 gezeigt, können die Träger auch als offenporige Platten 8 ausgebildet sein, die insbesondere wiederum Kunstfasern als auch Steinwolle oder Glaswolle beinhalten können. Dabei können mehrere offenporige Platten 8 übereinander gestapelt sein und dazwischen Ablaufrinnen 9 aufweisen. Die Platten können von einer Seite mit dem mit Rohwasser beladenden Luftstrom L' angeströmt werden, wodurch Rohwasser, das in dem Luftstrom L' enthalten ist, durch die Platten 8 aufgenommen und über die Sammel- und Ablaufrinnen 9 einer Sammelleitung 11 zugeführt werden kann. Über die Sammelleitung 11 kann das Reinwasser nunmehr der Sammel- oder Bedarfsstelle S zugeführt werden. Nach dem Durchtritt durch die Platten 8 ist der Luftstrom L" noch teilweise mit Rohwasser beladen. Der Luftstrom L" kann nun zum einen an die Umwelt abgegeben werden oder auch externen Anwendungen zur Verfügung gestellt werden, die erwärmte und mit Wasser angereicherte Luftströme nutzen. Denkbar wäre wiederum eine Verwendung zur Klimatisierung von Räumen. Alternativ kann der Luftstrom L" ganz oder teilweise als Luftstrom L dem Verdunster 2 zugeführt werden. So kann insbesondere ein geschlossener Kreislauf des Luftstroms erzeugt und damit eine Kontaminierung der Vorrichtung mit Fremdpartikeln aus angesaugter Luft vermieden werden.

Die Trägeranordnung kann zudem Kühlregister 10 umfassen, welche die Platten 8 durchdringen und mit dem einlaufenden Rohwasser gespeist werden, um die Trägeranordnung in der Vorrichtung 3 zu kühlen. Durch die Kühlung der Platten 8 wird auch der Luftstrom L' gekühlt, wodurch die Abscheidung des Wassers aus dem Luftstrom begünstigt wird. Als Nebeneffekt kann das einlaufende Rohwasser in den Kühlregistern 10 durch den Luftstrom L' bereits vorerwärmt werden, bevor es auf der Wärmeseite W der Wärmepumpe 1 erhitzt wird. In einer weitergehenden Ausführungsform der Erfindung wird ein Teil des einlaufenden Rohwassers durch die Kühlregister 10 geführt, um die Platten 8 zu kühlen, und ein anderer Teil des einlaufenden Rohwassers wird über die Vorrichtung 3 geführt, um die gesamte Vorrichtung 3 zusätzlich zu kühlen. Wie vorgehend erwähnt, kann dadurch das einlaufende Rohwasser vor dem Erhitzen auf der Wärmeseite W der Wärmepumpe 1 vorerwärmt werden und gleichzeitig die Wasserabscheidung in der Vorrichtung 3 durch deren Kühlung verbessert werden.

Durch ein Druckregelventil, das der Vorrichtung 3 nachgeschaltet ist, kann der Druck in der Vorrichtung 3 geregelt werden. Es ist dabei insbesondere vorteilhaft, den Luftstrom L' vor der Vorrichtung 3 durch ein Verdichtungsmittel 5 zu verdichten und über die Regelung des Druckregelventils und einer Drossel, die der Vorrichtung 3 vorgeschaltet ist, dafür zu sorgen, dass der in die Vorrichtung 3 einlaufende Luftstrom L' mit Eintritt in die Vorrichtung 3 möglichst schlagartig expandiert wird. Durch die schlagartige Expansion des Luftstroms kann die Abscheidung von Wasser aus dem Luftstrom L' begünstigt werden.

Wie in der Fig. 1 gezeigt, wird derjenige Teil des erhitzten Rohwassers, der nicht in den Luftstrom L verdunstet wird, zu der Kälteseite K der Wärmepumpe 1 geführt, um das erhitzte Rohwasser als Wärmequelle für die Wärmepumpe 1 zu nutzen. Das Rohwasser erreicht die Kälteseite K der Wärmepumpe dabei mit einer Temperatur von etwa 50 bis 60 °C. Nachdem dem erhitzten Rohwasser möglichst viel Wärme entzogen wurde, kann dieses in die Rohwasserquelle Q, die unter anderem das Meer sein kann, zurückgeführt werden.

Die durch das Rohwasser auf der Kälteseite K der Wärmepumpe 1 abgegebene Wärme wird genutzt, um das Kältemittel der Wärmepumpe 1, das beispielsweise CO₂ sein kann, zu erwärmen. Bevorzugt wird die Wärmepumpe 1 mit einer Maximaltemperatur von 80 °C auf der Wärmeseite W und einer Minimaltemperatur von - 50 °C auf der Kälteseite K betrieben.

Mit der in der Fig. 1 gezeigten Anordnung kann einlaufendes Rohwasser unter Einsatz geringer Mengen externer Energie durch die Wärmepumpe 1 erhitzt werden, um im Weiteren durch den Verdunster 2 verdunstet zu werden und in der Vorrichtung 3 abgeschieden zu werden, sodass aus dem Rohwasser, das beispielsweise Meerwasser sein kann, Brauchwasser erzeugt werden kann.

Die Wärmepumpe 1 weist auf der Kälteseite K in einem kältesten Teilbereich, der üblicherweise in unmittelbarer Nähe der Drossel auf der Kälteseite K, ist eine thermische Kopplung 4 auf. Durch die thermische Kopplung 4 kann für externe Anwendungen Kühlung bereitgestellt werden. Die thermische Kopplung 4 kann beispielsweise für die oben beschriebene CO₂-Wärmepumpe mit Arbeitstemperaturen von bis zu +80 °C auf der Wärmeseite und -50 °C auf der Kälteseite eine konstante Temperatur von -30 °C bereitstellen, die wiederum von externen Anwendungen zur Kühlung verwendet werden kann. Es ist beispielsweise denkbar, über die thermische Kopplung 4 eine "Kältequelle" für Industriebetriebe bereitzustellen oder auch für Raumklimatisierungssysteme von Gebäuden und insbesondere Hotelanlagen.

Die thermische Kopplung 4 ermöglicht im Umkehrschluss auch einen Wärmeeintrag auf der Kälteseite K der Wärmepumpe 1 aus bereits vorhandener Wärme einer externen Anwendung. Somit kann die Wärmepumpe 1 unter Einsatz geringerer Mengen externer Energie betrieben werden. Zusätzlich kann die Kälteseite K der Wärmepumpe 1 mit einer solar- und/oder geothermischen Vorrichtung 7 thermisch gekoppelt sein, um einen weiteren Wärmeeintrag auf der Kälteseite K zu erhalten. Durch die Vorrichtung 7 kann kostengünstig und mit technisch überschaubarem Aufwand vorhandene Umgebungsenergie für den Betrieb der Wärmepumpe 1 genutzt werden.

Im Weiteren kann ebenso der warme Luftstrom L", der aus der Vorrichtung 3 austritt, als Wärmeeintrag auf der Kälteseite K der Wärmepumpe 1 genutzt werden. Ebenso kann eine thermische Kopplung zwischen der Vorrichtung 3 und der Kälteseite K der Wärmepumpe 1 vorgesehen werden, um die durch den heißen Luftstrom L' in die Vorrichtung 3 eingebrachte Wärme als Wärmeeintrag auf der Kälteseite K der Wärmepumpe 1 zu nutzen.

Durch die effiziente Nutzung der in der Anordnung befindlichen Wärme auf der Kälteseite K der Wärmepumpe 1 kann die Effizienz der Wärmepumpe 1 enorm gesteigert werden, indem der Einsatz externer Energie für die Wärmepumpe 1 auf ein Minimum reduziert wird. Mit der erfindungsgemäßen Anordnung ist es möglich, auf effiziente Weise ein Rohwasser zumindest auf Brauchwasserqualität aufzubereiten und gleichzeitig Kühlung für eine externe Anwendung bereitzustellen.

### Bezugszeichenliste

1 Wärmepumpe
2 Verdunster
3 Vorrichtung, die geeignet ist, in einem Luftstrom enthaltenes Rohwasser abzuscheiden
4 thermische Kopplung
5 Verdichtungsmittel
6 solar- und/oder geothermische Vorrichtung
7 solar- und/oder geothermische Vorrichtung
8 offenporige Platte
9 Sammel- und Ablaufrinne
10 Kühlregister
11 Sammelleitung
L Luftstrom
L' mit Rohwasser beladener Luftstrom
L" Luftstrom nach Rohwasserabscheidung
Q Rohwasserquelle
S Bedarfs- bzw. Sammelstelle
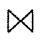 Druckregelventil
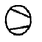 Verdichter
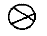 Drossel

## Patentansprüche

1. Anordnung zur Behandlung eines Rohwassers mit
einer Wärmepumpe (1), die ausgebildet ist, auf der Wärmeseite (W) das Rohwasser zu erhitzen;
einem Verdunster (2), der ausgebildet ist, das erhitzte Rohwasser teilweise in einen Luftstrom zu verdunsten; und
einer Vorrichtung (3), die dem Verdunster (2) nachgeschaltet ist und geeignet ist, das im Luftstrom enthaltene Rohwasser zumindest teilweise abzuscheiden,
wobei die Wärmepumpe (1) ausgebildet ist, auf der Kälteseite (K) durch nicht in den Luftstrom verdunstetes erhitztes Rohwasser mit Wärme versorgt zu werden; und
wobei die Wärmepumpe (1) in einem kältesten Teilbereich der Kälteseite (K) eine thermische Kopplung (4) aufweist, die geeignet ist, Kühlung für externe Anwendungen bereitzustellen.

2. Anordnung gemäß Anspruch 1, wobei der Vorrichtung (3), die geeignet ist, das im Luftstrom enthaltene Rohwasser abzuscheiden, ein Verdichtungsmittel (5) vorgeschaltet ist, das geeignet ist, den Luftstrom zu verdichten.

3. Anordnung gemäß einem der vorhergehenden Ansprüche, wobei die Vorrichtung (3), die geeignet ist, das im Luftstrom enthaltene Rohwasser abzuscheiden, eine Trägeranordnung mit einer Anzahl an Trägern umfasst.

4. Anordnung gemäß Anspruch 3, wobei die Träger porös gewirkte Kunststoffschläuche sind, die einer Wärmebehandlung zur mechanischen Stabilisierung unterzogen wurden.

5. Anordnung gemäß Anspruch 3, wobei die Träger poröse Schläuche sind mit einer großen Oberfläche im Inneren der Schläuche sind, insbesondere Schläuche aus Kunstfasern oder Metall.

6. Anordnung gemäß Anspruch 3, wobei die Träger offenporige Platten sind, die insbesondere Kunstfasern, Steinwolle oder Glaswolle beinhalten.

7. Anordnung gemäß einem der vorhergehenden Ansprüche, wobei die Vorrichtung (3), die geeignet ist, das im Luftstrom enthaltene Rohwasser abzuscheiden, durch das einlaufende Rohwasser vor dessen Erhitzung gekühlt wird.

8. Anordnung gemäß einem der vorhergehenden Ansprüche, wobei die Wärmepumpe (1) mit der Vorrichtung (3), die geeignet ist, das im Luftstrom enthaltene Rohwasser abzuscheiden, thermisch gekoppelt ist.

9. Anordnung gemäß einem der vorhergehenden Ansprüche, wobei die Anordnung weiterhin eine solar- und/oder geothermische Vorrichtung (6) umfasst, die ausgebildet ist, das Rohwasser weiter zu erhitzen.

10. Anordnung gemäß einem der vorhergehenden Ansprüche, wobei die Anordnung weiterhin eine solar- und/oder geothermische Vorrichtung (7) umfasst, die mit der Kälteseite der Wärmepumpe (1) thermisch gekoppelt ist.

11. Verfahren zur Behandlung eines Rohwassers mit den Schritten:
Erhitzen des Rohwassers;
teilweises Verdunsten des erhitzten Rohwassers in einen Luftstrom; und
zumindest teilweises Abscheiden des in den Luftstrom verdunsteten Rohwassers,
wobei das Rohwasser durch die Wärmeseite (W) einer Wärmepumpe (1) erhitzt wird;
wobei die Wärmepumpe (1) auf der Kälteseite (K) durch nicht in den Luftstrom verdunstetes erhitztes Rohwasser mit Wärme versorgt wird; und
wobei die Wärmepumpe (1) in einem kältesten Teilbereich der Kälteseite (K) eine thermische Kopplung (4) aufweist, um Kühlung für externe Anwendungen bereitzustellen.

12. Verfahren nach Anspruch 11, das weiterhin folgenden Schritt umfasst:
Verdichten des Luftstroms vor dem Abscheiden des in den Luftstrom verdunsteten Rohwassers.

13. Verfahren nach einem der vorhergehenden Ansprüche, wobei das erhitzte Rohwasser bis zur Sättigung des Luftstroms in diesen verdunstet wird.

## Claims

1. An assembly for treating a raw water having
a heat pump (1) which is designed to heat the raw water on the heating side (W);
a vaporizer (2) which is designed to vaporize the heated raw water partly into an air stream; and
a device (3) which is connected downstream of the vaporizer (2) and is suitable for separating out at least in part the raw water present in the air stream,
wherein the heat pump (1) is designed to be supplied with heat on the cooling side (K) via heated raw water that has not been vaporized into the air stream; and
wherein the heat pump (1), in a coldest subregion of the cooling side (K), has a thermal coupling (4) which is suitable for providing cooling for external applications.

2. The assembly as claimed in claim 1, wherein a compressing means (5) is connected upstream of the device (3) that is suitable for separating out the raw water present in the air stream, which compressing means is suitable for compressing the air stream.

3. The assembly as claimed in any one of the preceding claims, wherein the device (3) that is suitable for separating out the raw water present in the air stream comprises a carrier assembly having a number of carriers.

4. The assembly as claimed in claim 3, wherein the carriers are porously knitted flexible plastic tubings that have been subjected to a heat treatment for mechanical stabilization.

5. The assembly as claimed in claim 3, wherein the carriers are porous flexible tubings having a large surface area in the interior of the tubings, in particular flexible tubings made of artificial fibers or metal.

6. The assembly as claimed in claim 3, wherein the carriers are open-pore plates that contain in particular artificial fibers, rock wool or glass wool.

7. The assembly as claimed in any one of the preceding claims, wherein the device (3) that is suitable for separating out the raw water present in the air stream is cooled by the incoming raw water before the heating thereof.

8. The assembly as claimed in any one of the preceding claims, wherein the heat pump (1) is thermally coupled to the device (3) that is suitable for separating out the raw water present in the air stream.

9. The assembly as claimed in any one of the preceding claims, wherein the assembly additionally comprises a solar and/or geothermal device (6) that is designed to heat the raw water further.

10. The assembly as claimed in any one of the preceding claims, wherein the assembly additionally comprises a solar and/or geothermal device (7) that is thermally coupled to the cooling side of the heat pump (1).

11. A method for treating a raw water having the steps:
heating the raw water;
partial vaporization of the heated raw water into an air stream; and
at least partial separating out of the raw water vaporized into the air stream,
wherein the raw water is heated by the heating side (W) of a heat pump (1);
wherein the heat pump (1) is supplied with heat on the cooling side (K) by heated raw water that is not vaporized into the air stream; and
wherein the heat pump (1) has a thermal coupling (4) in a coldest subregion of the cooling side (K) in order to provide cooling for external applications.

12. The method as claimed in claim 11 that additionally comprises the following step:
compressing the air stream before separating out the raw water vaporized into the air stream.

13. The method as claimed in any one of the preceding claims, wherein the heated raw water is vaporized into the air stream up to saturation of said air stream.

## Revendications

1. Agencement de traitement d'une eau brute comprenant
une pompe à chaleur (1), qui est réalisée de manière à chauffer l'eau brute du côté chaleur (W) ;
un évaporateur (2) qui est réalisé pour évaporer partiellement dans un flux d'air l'eau brute chauffée ; et
un dispositif (3) qui est monté en aval de l'évaporateur (2) et qui est approprié pour séparer au moins en partie l'eau brute contenue dans le flux d'air,
la pompe à chaleur (1) étant réalisée de manière à être alimentée en chaleur du côté froid (K) par de l'eau brute chauffée non évaporée dans le flux d'air ; et
la pompe à chaleur (1) présentant, dans une région partielle la plus froide du côté froid (K), un couplage thermique (4) qui est approprié pour fournir un refroidissement pour des applications externes.

2. Agencement selon la revendication 1, dans lequel en amont du dispositif (3) qui est approprié pour séparer l'eau brute contenue dans le flux d'air, est disposé un agent de compression (5) qui est approprié pour comprimer le flux d'air.

3. Agencement selon l'une quelconque des revendications précédentes, dans lequel le dispositif (3) qui est approprié pour séparer l'eau brute contenue dans le flux d'air comprend un agencement de support avec une pluralité de supports.

4. Agencement selon la revendication 3, dans lequel les supports sont des tuyaux en plastique poreux tricotés qui ont été soumis à un traitement thermique en vue de leur stabilisation mécanique.

5. Agencement selon la revendication 3, dans lequel les supports sont des tuyaux poreux avec une grande surface à l'intérieur des tuyaux, notamment des tuyaux en fibres synthétiques ou en métal.

6. Agencement selon la revendication 3, dans lequel les supports sont des plaques à pores ouverts qui contiennent notamment des fibres synthétiques, de la laine de roche ou de la laine de verre.

7. Agencement selon l'une quelconque des revendications précédentes, dans lequel le dispositif (3) qui est approprié pour séparer l'eau brute contenue dans le flux d'air est refroidi par l'eau brute introduite avant son chauffage.

8. Agencement selon l'une quelconque des revendications précédentes, dans lequel la pompe à chaleur (1) est accouplée thermiquement au dispositif (3) qui est approprié pour séparer l'eau brute contenue dans le flux d'air.

9. Agencement selon l'une quelconque des revendications précédentes, dans lequel l'agencement comprend en outre un dispositif solaire thermique et/ou géothermique (6) qui est réalisé de manière à chauffer davantage l'eau brute.

10. Agencement selon l'une quelconque des revendications précédentes, dans lequel l'agencement comprend en outre un dispositif solaire thermique et/ou géothermique (7) qui est accouplé thermiquement au côté froid de la pompe à chaleur (1).

11. Procédé de traitement d'une eau brute, comprenant les étapes suivantes :
chauffage de l'eau brute ;
évaporation partielle de l'eau brute chauffée dans un flux d'air ; et
séparation au moins partielle de l'eau brute évaporée dans le flux d'air,
l'eau brute étant chauffée par le côté chaud (W) d'une pompe à chaleur (1) ;
la pompe à chaleur (1) étant alimentée en chaleur du côté froid (K) par de l'eau brute chauffée non évaporée dans le flux d'air ; et
la pompe à chaleur (1) présentant, dans une région partielle la plus froide du côté froid (K), un couplage thermique (4) pour fournir un refroidissement pour des applications externes.

12. Procédé selon la revendication 11, comprenant en outre l'étape suivante :
compression du flux d'air avant la séparation de l'eau brute évaporée dans le flux d'air.

13. Procédé selon l'une quelconque des revendications précédentes, dans lequel l'eau brute chauffée est évaporée dans le flux d'air jusqu'à saturation de ce dernier.
